# EUROPÄISCHE PATENTSCHRIFT

(11) **EP 4 623 434 B1**
(45) Veröffentlichungstag und Bekanntmachung des Hinweises auf die Patenterteilung: **25.03.2026**
(21) Anmeldenummer: 23790603.7
(22) Anmeldetag: 16.10.2023
(51) Int. Cl.: G09F 3/03

(54) **PLOMBE**
SEAL
JOINT D'ÉTANCHÉITÉ

(30) Priorität: 24.11.2022 DE 102022131164
(43) Veröffentlichungstag der Anmeldung: 01.10.2025
(73) Patentinhaber: Service Impex Costa Dorada S.L., 43840 Salou Tarragona (ES)
(72) Erfinder: CERBARI, Alexandru, 43840 Salou Tarragona (ES)
(74) Vertreter: Jeck, Jonathan
(86) Internationale Anmeldenummer: PCT/EP2023/078636
(87) Internationale Veröffentlichungsnummer: WO 2024/110119

(56) Entgegenhaltungen:
- CH-A5- 675 317
- CH-A5- 675 317
- DE-U1- 202022 100 618
- DE-U1- 202022 100 618

## Beschreibung

Die Erfindung betrifft eine Plombe gemäß dem Oberbegriff des Anspruchs 1.

Eine Plombe besteht aus einem Plombenkörper und einem Plombenband. Um auch extremen Witterungseinflüssen zu trotzen, besteht sie aus verwitterungsresistentem Material. Heutzutage handelt es sich dabei typischerweise um Metall oder Kunststoff.

Beim Verplomben wird das Plombenband in einem Bogen zu einer Bucht gelegt. Das Plombenband wird hierbei durch zwei gegenüberliegende Öffnungen an sich beim Öffnen oder beim Betätigen voneinander entfernenden Elementen hindurchgeführt.

Die gegenüberliegenden Öffnungen sind beispielsweise Teil eines Verschlusses. Nachdem so die Bucht gelegt ist, wird anschließend das Plombenband vermittels des Plombenkörpers zu einer Schlaufe festgelegt.

Der Begriff Schlaufe bezeichnet in diesem Dokument ein feststehendes Auge in Tau und/oder Bandwerk. Das feststehende Auge löst sich nicht und zieht nicht zu.

Die Schlaufe ist dabei so bemessen, dass sie, um entfernt zu werden, irreversibel zerstört werden muss. Die Schlaufe muss beispielsweise entfernt werden, um Zugang zu einem Behälterinhalt oder zu einem Gerät zu erlangen, oder um eine Einstellung zu verändern.

Durch eine Verplombung ist dadurch ein Nachweis erzielbar, ob eine Einstellung unmanipuliert ist, ein Behälter verschlossen belassen worden ist, ein Gerät unbenutzt geblieben ist.

Weil eine Plombe nur durch Zerstörung entfernt werden kann, trägt sie im besten Fall zum Müllaufkommen bei. Im schlechtesten Fall erfährt sie spontanen Eintrag in die Umgebung. Beides ist dem Umweltschutz abträglich.

Durch DE 295 06 104 U1 ist eine Plombe aus einem Kartonmaterial bekannt. Plombenkörper und Plombenband sind einstückig. Vom Plombenkörper geht das Plombenband aus. Der Plombenkörper besteht aus zwei aufeinanderklappbaren Teilen. Die beiden Teile sind um eine parallel oder senkrecht zum Plombenband verlaufende Falzung aufeinanderklappbar. Die beiden Teile sind mit einer Klebeschicht versehen. In einem Betriebszustand der Plombe ist der Plombenkörper mit einer von ihm beabstandeten Partie des Plombenbands unlösbar versiegelbar. Hierbei ist die vom Plombenkörper entfernte Partie des Plombenbands zwischen den beiden Teilen des Plombenkörpers hindurchgeführt und verklebt.

Durch CH 170 891 A ist eine Reklameplombe bekannt. Diese besteht aus einem Plombenkörper und einer Reklamemarke. Der Plombenkörper verbindet in diesen ein- und austretende Plombenbandpartien. Die Reklamemarke umrahmt den Plombenkörper. Die Reklamemarke verdeckt die in den Plombenkörper ein- und austretenden Plombenbandpartien. Die Reklamemarke ist nur nach Lösen der Plombe vom Plombenkörper ablösbar.

Durch WO 2020/157345 A1 ist ein Sicherheitsetikett bekannt, umfassend ein Sicherungsband. Das Sicherungsband verfügt an seinen beiden distalen Enden über unlösbar ineinanderführbare Endstücke. Die beiden Endstücke sind vom Typ männlich und weiblich ausgeführt. Das Sicherungsband besteht aus Cellulose oder einem Derivat hiervon. Die Endstücke bestehen aus biologisch abbaubarem Kunststoff.

Durch US 2004/032332 A1 ist eine Plombe in der Art eines Kabelbinders aus biologisch abbaubarem Werkstoff bekannt. Die Plombe ist mit einem Plombenkörper und einem Plombenband mit einer Befestigung vom Typ männlich und weiblich ausgeführt. Das Plombenband ist einseitig am Plombenkörper festgelegt. In das Plombenband oder in den Plombenkörper kann ein Informationsträger eingearbeitet sein. Die darin enthaltenen Informationen können berührungslos ausgelesen werden.

Durch US 2,639,479 ist ein Klebesiegel bekannt. Das Klebesiegel besteht aus einer Unterlasche, einer Oberlasche und einem Sicherungsband. Die Unterlasche ist mit einer Durchführungsöffnung für die Enden des Sicherungsbands versehen. Die Oberlasche ist gelenkig mit der Unterlasche verbunden. Die Durchführungsöffnung kann als ein vom Rand der Unterlasche eingearbeiteter Schlitz, oder als ein zentrales Loch ausgeführt sein. Ein Band, wie etwa ein Paket- oder ein Geschenkband, wird mit seinen freien Enden durch die Durchführungsöffnung gelegt. Durch Aufeinanderklappen der Oberlasche auf die Unterlasche werden die beiden zwischen den beiden Laschen zu liegen gekommenen Partien des Bands durch die auf der der Oberlasche zugewandten Seite der Unterlasche angeordnete Klebeschicht fixiert. Mittels der auf der der Oberlasche abgewandten Seite der Unterlasche angeordneten Klebeschicht wird das Klebesiegel mitsamt dem Band am Paket oder Geschenk durch Verkleben festgelegt. Durch DE202022100618U ist eine Plombe mit zwei klappbaren Plombenmantelhälften, einem Plombenband, einem Plombenkern und einem Sicherungselement bekannt.

Eine Aufgabe der Erfindung ist es, eine bevorzugt umweltfreundliche Plombe zu schaffen, die einfach in der Handhabung ist und einen verbesserten Schutz vor nachträglicher Veränderung aufweist.

Die Aufgabe wird durch die Merkmale des unabhängigen Anspruchs gelöst. Vorteilhafte Ausführungsformen sind in den Ansprüchen, den Zeichnungen sowie in der nachfolgenden Beschreibung, einschließlich der zu den Zeichnungen zugehörigen, wiedergegeben.

Die Erfindung wird nachfolgend anhand von in der Zeichnung dargestellter Ausführungsbeispiele näher erläutert. Dabei sind auch zusätzliche, über die vollständige Lösung der gestellten Aufgabe hinausgehende Vorteile gegenüber dem Stand der Technik aufgeführt. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar. Es zeigen in schematischer Darstellung:
Fig. 1 - eine perspektivische Ansicht einer ein Plombenband 03 und einen Plombenkörper 02 mit einem Plombenkern 05 und einem diesen beherbergenden Plombenmantel 06 umfassenden Plombe 01 in deren Betriebszustand.
Fig. 2 - eine perspektivische Ansicht der Plombe 01 aus Fig. 1 in deren Ausgangszustand.
Fig. 3 - den Plombenkern 05 der Plombe 01 aus Fig. 1 in einer Draufsicht.
Fig. 4 - den Plombenmantel 06 im Ausgangszustand der Plombe 01 aus Fig. 1 in einer Draufsicht.
Fig. 5 - den Plombenmantel 06 im Ausgangszustand der Plombe 01 aus Fig. 1 in einer Seitenansicht.
Fig. 6 - eine auch als Sicherungsetikett 07 bezeichnete Sicherungslasche der Plombe 01 aus Fig. 1 in einer Draufsicht.
Fig. 7 - einen zur Überführung der Plombe 01 aus dem Ausgangszustand (Fig. 2) in den Betriebszustand (Fig. 1) zu entfernender, auch als Etikettenschutz 08 bezeichneten Laschenschutz der Plombe 01 aus Fig. 1 in einer Draufsicht.
Fig. 8 - eine perspektivische Ansicht einer ein Plombenband 03 und einen Plombenkörper 02 mit einem Plombenkern 05 und einem diesen beherbergenden Plombenmantel 06 umfassenden Plombe 01 in einer von den Fig. 1 bis Fig. 7 abweichenden Ausgestaltung in deren Betriebszustand.
Fig. 9 - eine perspektivische Ansicht der Plombe 01 aus Fig. 8 in deren Ausgangszustand.
Fig. 10 - den Plombenkern 05 der Plombe 01 aus Fig. 8 in einer Draufsicht.
Fig. 11 - den Plombenmantel 06 im Ausgangszustand der Plombe 01 aus Fig. 8 in einer Draufsicht.
Fig. 12 - den Plombenmantel 06 im Ausgangszustand der Plombe 01 aus Fig. 8 in einer Seitenansicht.
Fig. 13 - eine auch als Sicherungsetikett 07 bezeichnete Sicherungslasche der Plombe 01 aus Fig. 8 in einer Draufsicht.
Fig. 14 - einen zur Überführung der Plombe 01 aus dem Ausgangszustand (Fig. 9) in den Betriebszustand (Fig. 8) zu entfernender, auch als Etikettenschutz 08 bezeichneten Laschenschutz der Plombe 01 aus Fig. 8 in einer Draufsicht.

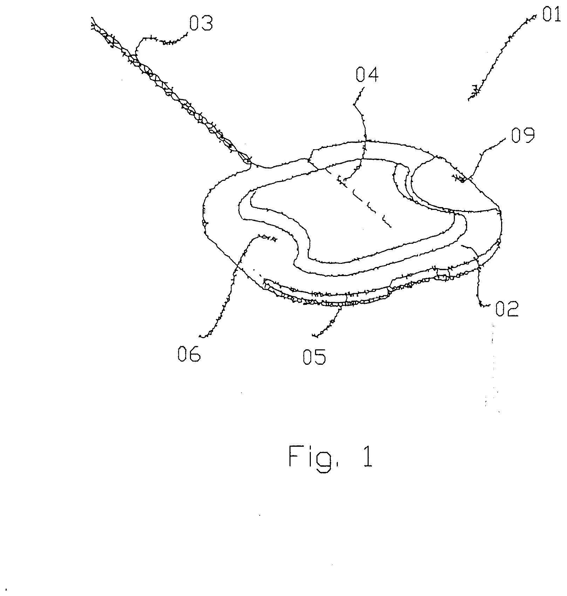

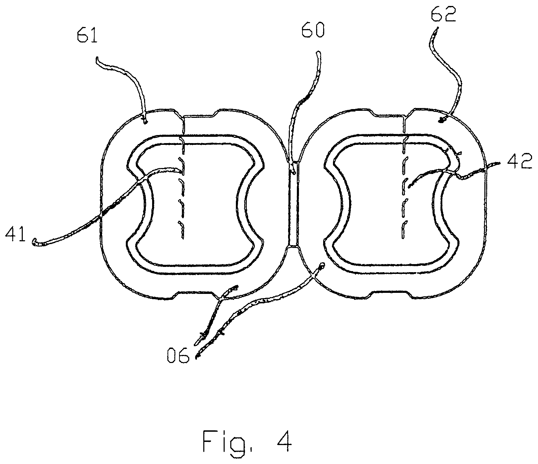

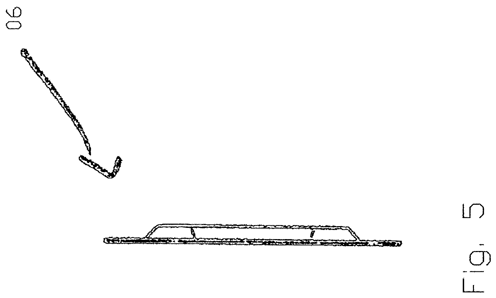

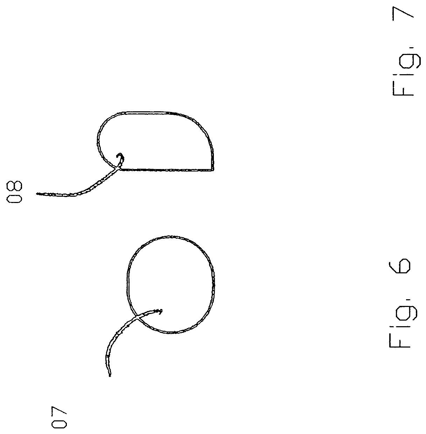

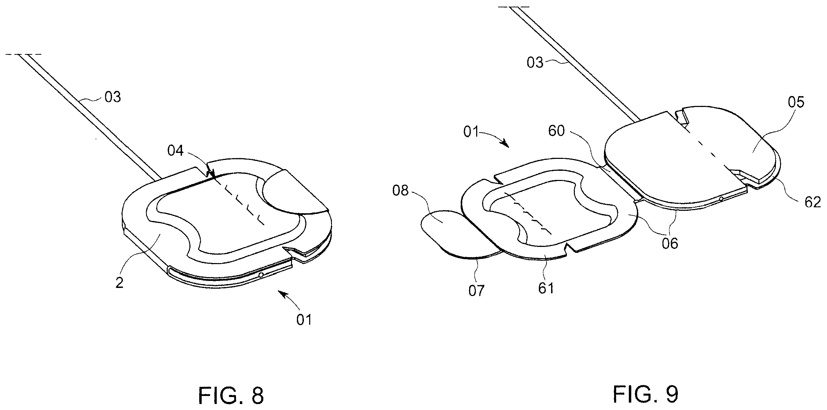

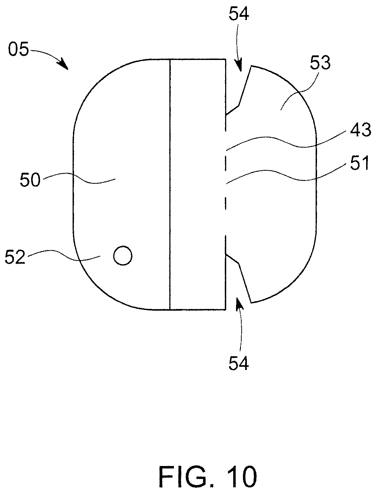

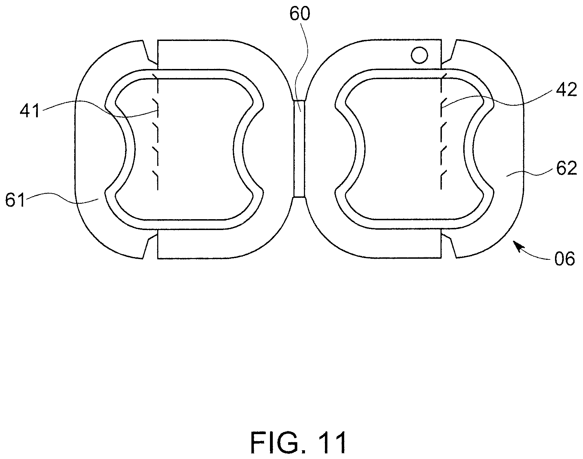

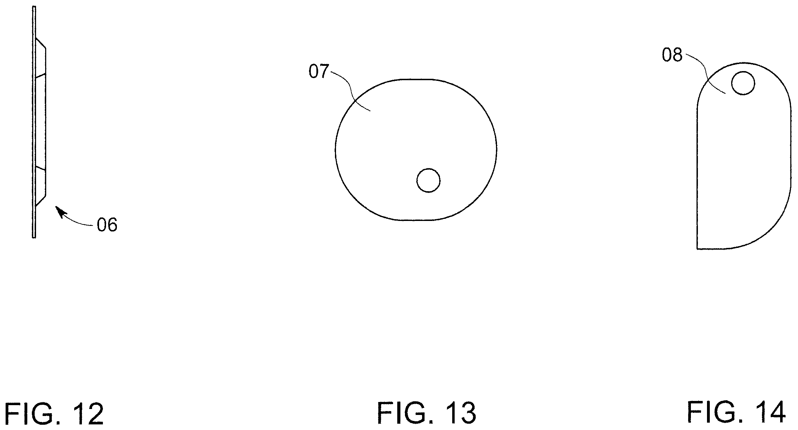

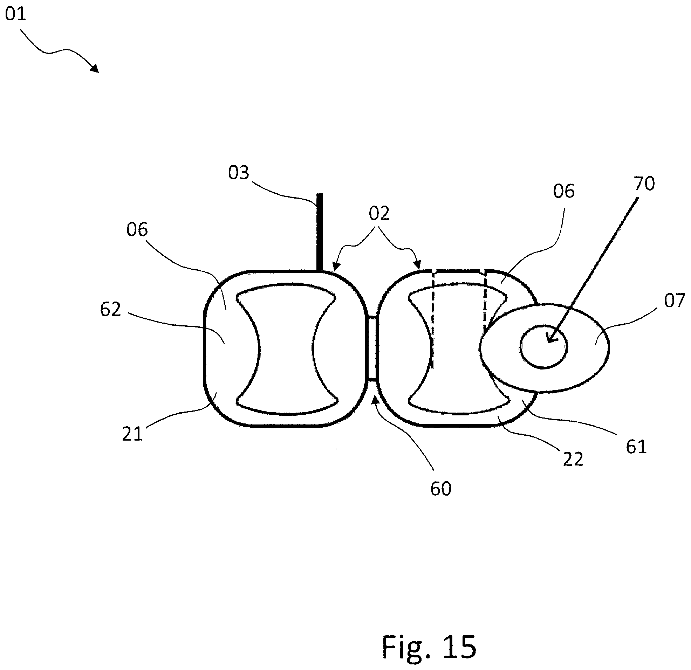

Fig. 15 - eine perspektivische Ansicht einer von den Fig. 1 bis Fig. 7 und in Fig. 8 bis 14 dargestellten Ausgestaltungen abweichenden, weiteren Ausgestaltung einer ein Plombenband 03 und einen Plombenkörper 02 mit einem Plombenkern 05 und einem diesen beherbergenden Plombenmantel 06 umfassenden Plombe 01 in deren Ausgangszustand mit Blick auf die Außenseiten der auch als jeweils von einer Partie 21, 22 des Plombenkörpers 02 umfassten, durch eine beispielsweise mit einer Knicklinie versehenen Verbindungslasche 60 vorzugsweise einstückig miteinander beweglich verbundenen Hälften 61, 62 des Plombenmantels 06 gesehen.

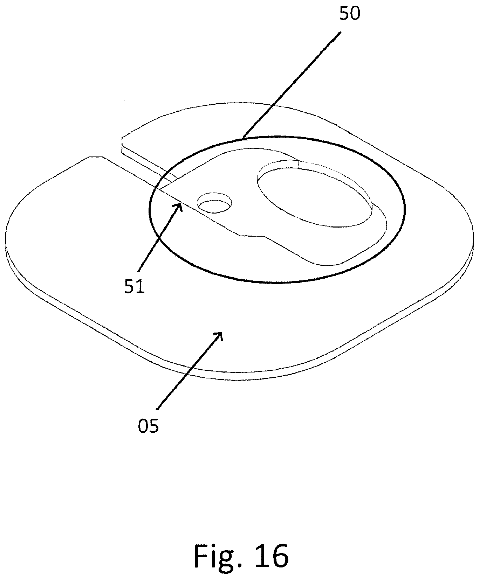

Fig. 16 - den als eine Platte 55 mit einem mit dieser entlang einer Knicklinie 51 verbundenen Sicherungselement, das in einem innerhalb einer in der Zeichnung hervorgehobenen kreisförmigen Markierung 50 befindlichen Bereich angeordnet ist, ausgeführten Plombenkern 05 der Plombe 01 aus Fig. 15 in einer perspektivischen Ansicht. Die das mit ihr entlang der auch als Faltlinie bezeichneten Knicklinie 51 verbundene Sicherungselement umfassende Platte weist eine halbovale Öffnung auf, welche am ein Verriegelungsteil darstellenden Sicherungselement einen Vorsprung bildet. Am Sicherungselement ist ein Loch ausgebildet. Die Platte ist mit einem zu einem Rand der Platte hin führenden Schlitz versehen. Um die Plombe 01 zu verschließen, wird das obere freie Ende des beispielsweise durch ein Seil gebildeten, kurz als Plombenband 03 bezeichneten, flexiblen Verschlusselements in das Loch im Verriegelungsteil eingeführt, wobei es vorteilhaft ist, die Schlaufe in den Ösen des zu verplombenden Objekts zu minimieren. Ferner wickelt sich das freie Ende des durch ein Seil gebildeten, kurz als Plombenband 03 bezeichneten, flexiblen Verschlusselements von unten um den Vorsprung des Verriegelungsteils und tritt in den Schlitz dieses Elements ein, wodurch sich das Seil um den starren Vorsprung wickelt und eine Schlaufe bildet.

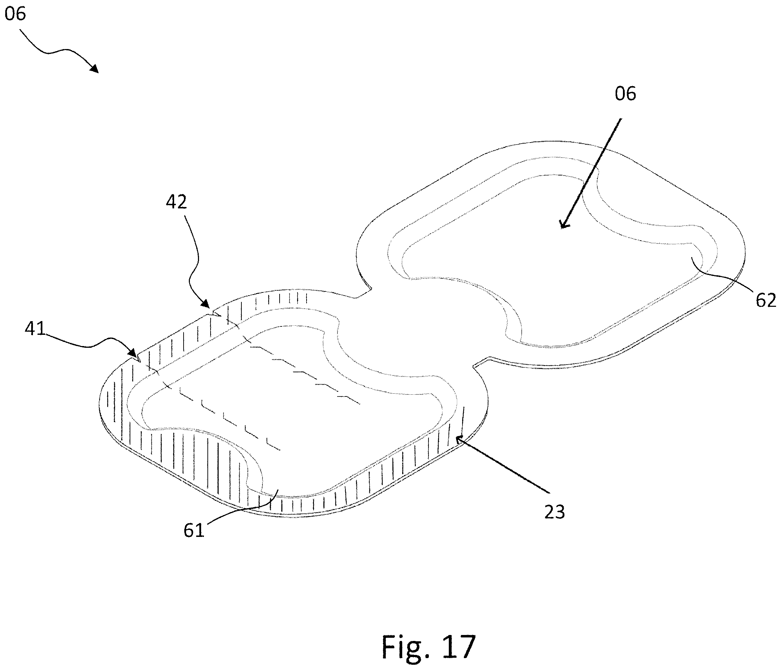

Fig. 17 - den beispielsweise in einer Hälfte 61 seiner beiden Hälften 61, 62 mit beispielsweise zwei Perforationslinien 41, 42 als Sollbruchstellen versehenen Plombenmantel 06 im Ausgangszustand der Plombe 01 aus Fig. 15 in einer perspektivischen Ansicht, wobei wenigstens eine Hälfte 61, 62 des Plombenmantels 06 mit einer Klebeschicht 23 oder mit einem Teil einer Klebeschicht 23 versehen ist.

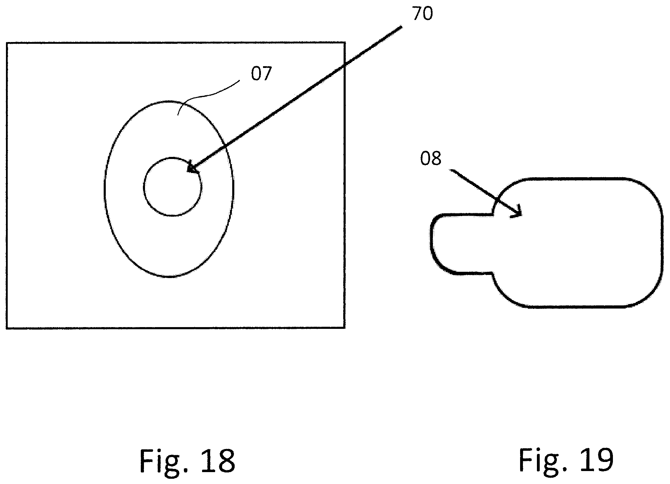

Fig. 18 - eine auf einem Trägersubstrat angeordnete, auch als Sicherungsetikett 07 bezeichnete Sicherungslasche der Plombe 01 aus Fig. 15 in einer Draufsicht. Das auch als Verschlussaufkleber bezeichnete Sicherungsetikett 07 kann mit einem Indikator 70 zum Nachweis mindestens eines Umwelteinflusses versehen sein, der beispielsweise thermische Belastungen, Ionisierungen, Radioaktivität in deren maximaler Intensität und/oder kumuliert über die Zeit anzeigt.
Fig. 19 - einen zur Überführung der Plombe 01 aus dem Ausgangszustand (Fig. 15) in einen Betriebszustand zu entfernenden, beispielsweise als Spezialfolie ausgeführten oder eine solche umfassenden, auch als Etikettenschutz 08 bezeichneten Laschenschutz der Plombe 01 aus Fig. 15 in einer Draufsicht.

Eine in Fig. 1, Fig. 2, Fig. 3, Fig. 4, Fig. 5, Fig. 6, Fig. 7 ganz oder in Teilen dargestellte Plombe 01 umfasst einen Plombenkörper 02 und ein flexibles Verschlusselement in Form eines an dem Plombenkörper 02 zu einer Schlaufe legbaren und zum Erhalt einer Versiegelung mit dem Plombenkörper 02 zumindest zerstörungsfrei unlösbar verbindbares Plombenband 03.

Die Plombe 01 weist einen Ausgangszustand und einen Betriebszustand auf.

Der Plombenkörper 02 umfasst einen einen Plombenkern 05 und einen Plombenmantel 06 mit zwei in einem Ausgangszustand entlang einer Verbindungslasche 60 beweglich miteinander verbunden Plombenmantelhälften 61, 62.

Die Plombenmantelhälften 61, 62 sind zur Überführung in den Betriebszustand zumindest miteinander sowie mit zwei voneinander beabstandeten Abschnitten des Plombenbands 03 unlösbar versiegelbar verbindbar.

Zumindest eine der Plombenmantelhälften 61, 62 ist mit einer Klebeschicht zur Herstellung der durch eine unlösbar versiegelbare Verbindung der beiden Plombenmantelhälften 61, 62 gebildete Versiegelung mit der verbleibenden Plombenmantelhälfte 62, 61 versehen. Die Klebeschicht kann gegebenenfalls auch einer Festlegung eines oder der Abschnitte des Plombenbands 03 dienen oder zumindest beitragen.

Die Klebeschicht kann im Ausgangszustand vor dem Verplomben von einer Spezialfolie geschützt sein.

In dem Ausgangszustand ist eine Plombenmantelhälfte 61, 62 des Plombenkörpers 02 mit dem Plombenkern 05 versehen. In dem Betriebszustand ist der Plombenkern 05 zwischen den unlösbar versiegelt verbundenen Plombenmantelhälften 61, 62 des Plombenkörpers 02 beherbergt.

Das Plombenband 03 ist im Betriebszustand entlang zweier voneinander beabstandeter Abschnitte zwischen den Plombenmantelhälften 61, 62 des Plombenkörpers 02 festgelegt. Ein außerhalb des Plombenkörpers 02 verlaufender, zwischen beidseitig festgelegten Abschnitten verbleibender Teil des Plombenbands 03 ist im Betriebszustand zu einer Schlaufe festgelegt.

**In** dem Ausgangszustand **ist** ein erster Abschnitt des Plombenbands 03 am Plombenkörper 02 festgelegt. In dem Ausgangszustand ist ein erster Abschnitt des Plombenbands 03 zumindest zum Teil zwischen dem Plombenkern 05 und der mit diesem versehenen Plombenmantelhälfte 61, 62 des Plombenkörpers 02 festgelegt. Der Plombenkern 05 weist ein Sicherungselement 50 zur Festlegung wenigstens eines zweiten Abschnitts des Plombenbands 03 auf.

Das Sicherungselement 50 des Plombenkerns 05 weist eine im Ausgangszustand mit einer Basispartie 52 entlang einer kurz als Knicklinie 51 und auch als Kern-Falt- oder Kern-Biegelinie bezeichneten Kern-Knicklinie schwenkbar verbundene Ankerpartie 53 auf. Die Knicklinie 51 kann beispielsweise durch eine Falzung gebildet sein. Vorteilhaft ist im Betriebszustand zumindest der zweite Abschnitt des Plombenbands 03 wenigstens einmalig um die Ankerpartie 53 gewickelt.

Bevorzugt umschlingt der zur Herstellung des Betriebszustands festzulegende Abschnitt des Plombenbands 03 die Ankerpartie 53 zumindest teilweise parallel zur Kern-Knicklinie.

Die Plombe zeichnet sich dadurch aus, dass die Ankerpartie 53 des Sicherungselements 50 mehrseitig von einer verbleibenden Plombenkernpartie 55 des Plombenkerns **05** umgeben ist, von welcher verbleibenden Plombenkernpartie 55 jedoch nur ein Teil via der Knicklinie 51 mit der Ankerpartie 53 verbunden ist.

Ein verbleibender Teil des Plombenkerns 05 spannt eine Ebene auf, innerhalb welcher Ebene die Ankerpartie 53 auf gleich mehreren Seiten an den verbleibenden Teil des Plombenkerns 05 angrenzt, gar von diesem ganz oder teilweise umgeben ist. Beispielsweise grenzt die verbleibende Plombenkernpartie 55 zwei- oder mehrseitig an die Ankerpartie 53 an. Vorteilhaft kann die verbleibende Plombenkernpartie 55 einen die Ankerpartie 53 ganz oder teilweise umgebenden Rahmen bilden.

Bevorzugt ist in dem Ausgangszustand zumindest die verbleibende Plombenkernpartie 55, vorzugsweise alternativ oder zusätzlich die Basispartie **52** mit einer Plombenmantelhälfte 62 verbunden, vorzugsweise verklebt.

Besonders bevorzugt ist die Knicklinie 51 durch einen Halbschnitt 43 verwirklicht. Der Halbschnitt 43 kann beispielsweise verwirklicht sein, indem entweder eine Kartonplatte nicht ganz, sondern nur zum Teil durchtrennt wird, insbesondere in Bezug auf ihre Dicke oder Stärke, oder indem zwei Kartonplatten aufeinandergeklebt sind, wobei eine Kartonplatte im Bereich des Halbschnitts 43 durchtrennt und die verbleibende Kartonplatte durchgängig über den Halbschnitt 43 hinwegführend ausgebildet ist. Die Knicklinie 51 kann alternativ zu einem Halbschnitt 43 beispielsweise durch eine Perforationslinie oder eine Falzung verwirklicht sein, oder durch eine Kombination.

Die Ankerpartie 53 grenzt einseitig an die Knickline 51 an. Die Ankerpartie 53 ist beispielsweise an ihren übrigen Seiten durch eine beispielsweise durch Stanzen hergestellte Trennungslinie 56 von der verbleibenden Plombenkernpartie 55 getrennt.

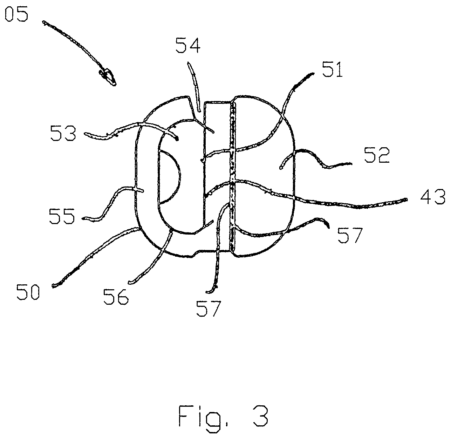

Zur Knicklinie 51 hin verläuft die Trennungslinie 56 bevorzugt V-förmig konvergent. Hierdurch legt sich das Plombenband 03 beim zumindest teilweise Umschlingen der Ankerpartie 53 eng entlang der Knicklinie 51 an. Die Trennungslinie 56 kann ein- oder beidseitig über die Knicklinie 51 hinweg laufen, wie in Fig. 3 dargestellt.

An die Knicklinie 51 angrenzend kann eine Kerbe 54 vorgesehen sein. Bevorzugt ist eine solche Kerbe 54 entlang eines Abschnitts um die Ankerpartie 53 herum vorgesehen.

Die Knicklinie 51 kann beispielsweise durch eine Falzung gebildet sein.

Die Trennlinie 56 kann durch eine Stanzung hergestellt sein. Eine gegebenenfalls vorgesehene Kerbe 54 kann gleichzeitig mit der Trennlinie 56durch Stanzen hergestellt sein.

Vorteilhaft ist die Ankerpartie 53 des Sicherungselements 50 über die Knicklinie 51 mit der verbleibenden Plombenkernpartie 55 und damit mit dem gesamten verbleibenden Teil des Plombenkerns 05 verbunden. An gegebenenfalls nicht an die Knicklinie 51 angrenzenden Seiten besteht bevorzugt keine Verbindung zwischen der Ankerpartie 53 und der verbleibenden Plombenkernpartie 55. Entlang zumindest eines Teils dieser Trennung verläuft die Trennlinie 56.

Die Ankerpartie 53 ist vorteilhaft rahmenartig von der verbleibenden Plombenkernpartie 55 umgeben.

Die Ankerpartie 53 ist bevorzugt an einer Seite mit der verbleibenden Plombenkernpartie 55 - vorzugsweise dem Rahmen - über die Knicklinie 51 verbunden. An den verbleibenden Seiten ist beispielsweise durch Stanzen die Verbindung zwischen Ankerpartie 53 und dem Rahmen unterbrochen. Eine Kerbe 54 kann den Umlauf des Rahmens um die Ankerpartie 53 unterbrechen.

Zumindest im Ausgangszustand ist die verbleibenden Plombenkernpartie 55 - bevorzugt der Rahmen - an einer Plombenmantelhälfte 62 beispielsweise durch eine Klebeschicht festgelegt. Demgegenüber verbleibt die Ankerpartie 53 im Ausgangszustand um die Knicklinie 51 aus der vom Rahmen aufgespannten Fläche herausschwenkbar.

Der Plombenkörper 02 kann mit Sollbruchstellen 04 versehen sein, die durch Einreißen einen Versuch eines Lösens des Plombenbands 03 vom Plombenkörper 02, insbesondere vom Sicherungselement 50 anzeigen.

Die Sollbruchstellen 04 können durch eine oder mehrere Perforationslinien 41, 42 im Plombenmantel 06 verwirklicht sein oder solche umfassen. Bevorzugt erstreckt sich eine solche Perforationslinie 41, 42 entlang der Verlängerung des Verlaufs des zur Herstellung des Betriebszustands um die Ankerpartie des Sicherungselements 50 geschlungenen Abschnitts des Plombenbands 03 von der Schlaufe her kommend zum Rand des Plombenkörpers 02 hin und über diesen hinweg beispielsweise bis zur Mitte des Plombenkörpers 02 hin zumindest durch den Plombenmaltel 06.

Vorteilhaft sind die Perforationslinien 41, 42 spiegelsymmetrisch zur Verbindungslasche 60 auf den beiden Plombenmantelhälften 61, 62 angeordnet. Die Knicklinie 51 kann ebenfalls - zumindest im Betriebszustand - deckungsgleich mit diesen Performationslinien 41, 42 angeordnet sein. Eine durchgehende Perforation verläuft so als Sollbruchstelle 04 entlang einer Linie durch alle Teile der Plombe 01. Entlang dieser Linie werden beim Öffnen der Plombe 01 der Plombenkörper 02 mitsamt dem Plombenkern 05 zerrissen. Dies macht das Öffnen der Plombe 01 einfach und ohne großen Kraftaufwand und macht sie durch die Beschädigung der Hauptelemente der Konstruktion in Zukunft unbrauchbar.

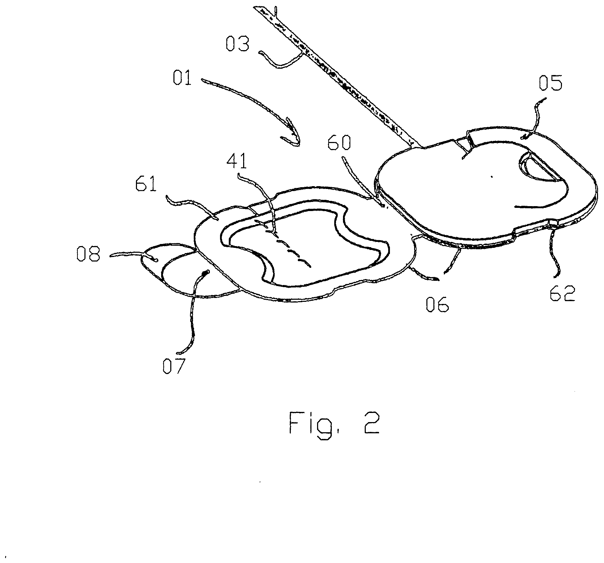

Besonders hervorzuheben ist, dass der Plombenkern 05 vorzugsweise im Bereich der Basispartie 52 eine Rille 57 aufweist. Die Rille 57 verläuft vorzugsweise parallel zur Knicklinie 51. Die Rille nimmt einen bereits im Ausgangszustand mit dem Plombenkörper 02 verbundenen Abschnitt des Plombenbands 03 auf. Das Plombenband 03 ist mit seinem bereits im Ausgangszustand mit dem Plombenkörper 02 verbundenen Abschnitt in die Rille eingelegt. Die Basispartie 52 des Plombenkerns 05 ist mit seiner mit der Rille 57 versehenen Seite der Plombenmantelhälfte 62 zugewandt und mit in die Rille 57 eingelegtem Abschnitt des Plombenbands 03 mit der Plombenmantelhälfte 62 geklebt. Mit anderen Worten ist das Plombenband 03 mit seinem bereits im Ausgangszustand mit dem Plombenkörper 02 verbundenen und in die Rille 57 gelegten Abschnitt beim Zusammenkleben der in Fig. 2 rechten Plombenmantelhälfte 62 und dem Plombenkern 05 direkt zwischen die Baisispartie 52 des Plombenkerns 05 und die Plombenmantelhälfte 62 eingeklemmt und verklebt.

Dabei sind auch gleich die verbleibende Plombenkernpartie 55 und die rechte Plombenmantelhälfte 62 durch Verkleben miteinander verbunden. Nur die Ankerpartie 53 bleibt bis zur Überführung der Plombe in deren Betriebszustand zumindest zunächst nur über die Knicklinie 51 mit dem Plombenmantel 06 verbunden.

Zur Überführung in den Betriebszustand wird das Plombenband 03 mit einem zweiten Abschnitt, der von dem bereits im Ausgangszustand am Plombenkörper 02 festgelegten ersten Abschnitt des Plombenbands 03 beabstandet ist, bevorzugt eineinhalb mal um die Ankerpartie 53 geschlungen.

Der zweite Abschnitt des Plombenbands 03 kann am Plombenkörper 02 beispielsweise durch folgende Schritte festgelegt sein oder werden:
- Herausklappen der Ankerpartie 53 um die Knicklinie 51 aus einer von der verbleibenden Plombenkernpartie 55 und der mit dem Plombenkern 05 versehenen Plombenmantelhälfte 62 aufgespannten Ebene,
- Mindestens teilweises, bevorzugt mindestens einmaliges Umschlingen der herausgeklappten Ankerpartie 53 mit dem zur Herstellung des Betriebszustands am Plombenkern 05 festzulegenden Abschnitt des Plombenbands 03. Bevorzugt erfolgt das Umschlingen parallel zur Knicklinie 51.
- Zurückklappen der vom festzulegenden Abschnitt des Plombenbands 03 wenigstens teilweise umschlungenen Ankerpartie 53 zurück in die von der verbleibenden Plombenkernpartie 55 und der mit dem Plombenkern 05 versehenen Plombenmantelhälfte 62 aufgespannten Ebene, und
- Aufeinander- beziehungsweise Zusammenklappen und Verkleben der beiden Plombenmantelhälften 61, 62 um die Verbindungslasche 60.

Das Verkleben erfolgt bevorzugt durch Abziehen einer Schutzfolie von wenigstens einer der beiden Plombenmantelhälften 61, 62. Anschließend werden die beiden Plombenmantelhälften 61, 62 um die Verbindungslasche 60 in Übereinstimmung und unter Aufeinanderlegen ihrer miteinander vermittels der Klebeschicht zu verklebenden Flächen aufeinandergeklappt, wobei die nunmehr ungeschützte Klebeschicht auf zumindest einer der beiden Plombenmantelhälften 61, 62 der jeweils anderen Plombenmantelhälfte 62, 61 zugewandt ist.

Das Plombenband 03 wird direkt um die Ankerpartie 53 geschlungen, wobei es bevorzugt in eineinhalb Windungen um die Ankerpartie 53 gewickelt wird. Dadurch bildet das Plombenband 03 eine Schlaufe, die das Plombenband 03 sicher an der Ankerpartie 53 hält, wenn versucht wird, es nach dem Verschließen aus dem Plombenmantel 06 zu ziehen. Dies vereinfacht die Herstellung der Plombe 01 und die Herstellung ihres Betriebszustands.

Der Plombenkörper 02 kann mit mindestens einem Indikator zum Nachweis wenigstens eines Umwelteinflusses versehen sein.

Ein solcher Indikator kann beispielsweise in ein Sicherheits- beziehungsweise Sicherungsetikett 07 integriert sein.

Ob ein Behälterinhalt unversehrt ist, lässt sich durch eine herkömmliche Verplombung nicht nachweisen, sofern der Behälterinhalt auch ohne Öffnen veränderbar ist.

Mit anderen Worten kann eine Unversehrtheit beispielsweise eines verplombten Behälterinhalts durch eine herkömmliche Plombe nicht nachgewiesen werden, sofern diese Unversehrtheit allein durch Umwelteinflüsse beeinträchtigt werden kann, welche Umwelteinflüsse kein Öffnen des Behälters oder keinen unmittelbaren Kontakt zum Behälterinhalt bedürfen.

Das selbe gilt für verplombte Einstellungen oder verplombte Geräte, die Veränderungen oder Beeinträchtigungen allein durch Umwelteinflüsse erfahren können.

Zur Verbesserung der Umweltverträglichkeit können zumindest der Plombenkörper 02 und/oder das Plombenband 03 aus einem biologisch abbaubaren Werkstoff bestehen.

Die Plombe 01 kann wie nachfolgend beschrieben verwendet werden.

Der Plombenmantel 06 weist im Ausgangszustand zwei durch eine Verbindungslasche 60 beweglich miteinander verbundene Hälften 61, 62 (Plombenmantelhälften) auf.

Im Ausgangszustand ist an einer der Hälften 61, 62, im Ausführungsbeispiel in Fig. 2 die rechte Hälfte 62, der Plombenkern 05 angeordnet.

Zwischen dem Plombenkern 05 und der entsprechenden Hälfte 61, 62, im Ausführungsbeispiel in Fig. 2 der rechten Hälfte 62, kann ein erster Abschnitt des Plombenbands 03 festgelegt sein.

Zumindest eine der Hälften 61, 62 kann mit einer Klebeschicht versehen sein. Die Klebeschicht verbindet nach dem Zusammenklappen der beiden Hälften 61, 62 diese unlösbar miteinander. Die Klebeschicht kann mit einer abziehbaren Schutzfolie bis zum Gebrauch der Plombe 01 abgedeckt sein.

An einer der Hälften 61, 62, im Ausführungsbeispiel in Fig. 2 die linke Hälfte 61, kann ein beispielsweise selbstklebendes Sicherungsetikett 07 angeordnet sein. Das Sicherungsetikett 07 ragt dabei im Ausgangszustand seitlich über die entsprechende Hälfte 61, 62 hinaus. Die über die entsprechende Hälfte 61, 62 hinausragende Klebefläche des Sicherungsetiketts 07 kann durch einen beispielsweise als Abreißfolie ausgeführten Etikettenschutz 08 geschützt sein.

Zur Herstellung einer Verplombung wird zunächst die Ankerpartie 53 um die Knicklinie 51 hochgeklappt.

Anschließend wird das freie Ende des Plombenbands 03 durch Augen oder Ösen eines zu verplombenden Gegenstands hindurchgeführt. Der hiernach durch die Augen oder Ösen hindurchgeführte, zweite Abschnitt des Plombenbands wird vorteilhaft durch eine Kerbe 54 hindurchführend mindestens einmalig um die hochgeklappte Ankerpartie 53 gewickelt. Die Ankerpartie 53 wird anschließend wieder zurückgeklappt in die Ebene der sie umgebenden verbleibenden Plombenkernpartie 55.

Die so hergestellte, durch die Augen oder Ösen des zu verplombenden Gegenstands hindurchgeführte Schlaufe des Plombenbands 03 wird festgelegt, indem zunächst eine gegebenenfalls auf der Klebeschicht angeordnete Schutzfolie abgezogen wird. Dann wird die verbleibende Plombenmantelhälfte 61, 62, im Ausführungsbeispiel in Fig. 2 die linke Hälfte 61, unter Biegung der Verbindungslasche 60 auf die mit dem Plombenkern 05 versehene Plombenmantelhälfte 62, 61, im Ausführungsbeispiel in Fig. 2 die rechte Hälfte 62, geklappt.

Die Klebeschicht versiegelt die beiden Hälften 61, 62 und bevorzugt zugleich die verbleibende Hälfte 61, 62, im Ausführungsbeispiel in Fig. 2 die linke Hälfte 61, mit dem Plombenkern 05 unter gleichzeitiger Festlegung des zweiten Abschnitts des Plombenbands 03 im Plombenkörper 02.

Nun kann der Etikettenschutz 08 von der über die entsprechende Hälfte 61, 62, im Ausführungsbeispiel in Fig. 2 über die linke Hälfte 61, hinausragenden Klebefläche des Sicherungsetiketts 07 abgezogen werden.

Der herausragende Teil des Sicherungsetiketts 07 wird dann um die Kante der entsprechenden Plombenmantelhälfte 61, 62, über welche es hinausragt herum auf die andere Plombenmantelhälfte 62, 61 geklebt.

Wichtig ist hervorzuheben, dass zumindest der Plombenkörper 02 und/oder das Plombenband 03 aus einem biologisch abbaubaren Werkstoff bestehen können.

Um im Zeichen steigenden Umweltbewusstseins und Umweltschutzes dem schädlichen spontanen Eintrag von Kunststoffen und Metallen, wie sie heutzutage zum Verplomben gang und gäbe sind, in die Umgebung Einhalt zu gebieten, wird mit der Plombe 01 mit Plombenkörper 02 und/oder Plombenband 03 aus biologisch abbaubarem Werkstoff das Ziel erreicht, eine schädliche Beeinträchtigung der Umgebung so gering wie möglich zu gestalten. Eine derartig schädliche Beeinträchtigung der Umgebung kann sowohl durch einen spontanen Eintrag einer nicht mehr benötigten Plombe 01 in die Umgebung, als auch durch eine ordnungsgemäße Entsorgung einer nicht mehr benötigten Plombe entstehen. Dabei ist anzumerken, dass dem spontanen Eintrag grundsätzlich kein Einhalt geboten werden kann. Durch die biologisch abbaubare Ausgestaltung der Plombe ist der Eintrag in die Umwelt jedoch nicht so schädlich.

Biologisch abbaubare Werkstoffe, kurz BAW, müssen innerhalb von 6-10 Wochen in einer Großkompostierung abgebaut werden. Die Prüfung von BAWs erfolgt durch die DIN-Norm EN 13432. Sie müssen nicht unbedingt aus biologischen Rohstoffen bestehen. Beispiele dafür sind so genannte Stärke-Blends, beispielsweise auf Maisbasis, oder bestimmte Polyester.

Bei dem biologisch abbaubaren Werkstoff kann es sich um einen biologisch abbaubaren Kunststoff handeln.

Beispielsweise handelt es sich bei um einen biologisch abbaubaren und biobasierten Kunststoff.

Bevorzugt handelt es sich dem biologisch abbaubaren Werkstoff jedoch um einen in der Natur vorkommenden, kompostierbaren Werkstoff.

Besonders bevorzugt besteht der biologisch abbaubare Werkstoff zumindest teilweise aus eigen-kompostierbarem Material.

Die Möglichkeit zur Eigen-Kompostierung stellt sicher, dass auch solche Plomben 01, die im Zuge ihrer Entsorgung einer nicht-industriellen Verwertung zugeführt werden, geringstmöglichen schädlichen Einfluss auf die Umwelt ausüben.

Die auch als Rotte oder Verrottung bekannte Kompostierung bezeichnet den Teil des Nährstoffkreislaufs. Bei diesem Teil des Nährstoffkreislaufs wird organisches Material unter Einfluss von Luftsauerstoff von Bodenlebewesen abgebaut. Neben Kohlendioxid werden dabei auch wasserlösliche Mineralstoffe freigesetzt, die als Dünger wirken. Ein Teil der bei diesem Abbau entstehenden Zwischenprodukte wird zu Humus umgewandelt.

Bei dem biologisch abbaubaren Werkstoff kann es sich beispielsweise um:
- einen biologisch abbaubaren Kunststoff, und/oder
- einen biologisch abbaubaren und biobasierten Kunststoff, und/oder
- ein festes Material der Polymilchsäure, und/oder
- Cellulose, und/oder
- Celluloseester, und/oder
- Celluloid, und/oder
handeln. Der biologisch abbaubare Werkstoff kann alternativ oder zusätzlich auf den genannten Varianten basieren. Alternativ oder zusätzlich kann der biologisch abbaubare Werkstoff die genannten Varianten umfassen.

Vorteilhaft kann der nachfolgend kurz auch als Basis bezeichnete Plombenkörper 02 bei allen beschriebenen Ausgestaltungen vollständig oder teilweise aus einem wasserdichten Material auf Cellulosebasis hergestellt sein.

Alternativ oder zusätzlich kann die Basis oder Teile von ihr aus wasserfestem Papier oder Pappe hergestellt sein.

Ebenfalls wichtig ist hervorzuheben, dass der Begriff Plombenband 03 ein strangförmiges Element mit einer größten Erstreckung entlang des Strangs umfasst. Das strangförmige Element kann mit beliebiger Geometrie seines Querschnitts quer zur Erstreckung des Strangs ausgebildet sein. Der Begriff Band beschränkt in diesem Zusammenhang den Querschnitt weder auf eine flache Geometrie, noch auf eine kreisrunde Geometrie. Bei Vorliegen einer flachen Geometrie wäre das Band am ehesten als ein Streifen beschreibbar. Bei Vorliegen einer kreisrunden Geometrie wäre das Band am ehesten als ein Seil oder eine Schnur oder ein Draht beschreibbar. Es sind für die vorliegende Plombe 01 sowohl die genannten, als auch hierzwischen liegende Geometrien des Querschnitts des strangförmigen Elements verwendbar. Das Plombenband 03 kann biegeschlaff, biegeelastisch, biegeweich oder biegesteif ausgeführt sein, ohne Einschränkung der grundsätzlichen Verwendbarkeit der Plombe 01. Im vorliegenden Dokument steht der Begriff Plombenband hiernach stellvertretend für ein flexibles Verschlusselement beliebiger Querschnittsform. Das Plombenband als flexibles Verschlusselement weist vorzugsweise eine wesentlich größere Erstreckung in einer Längsrichtung auf, als quer zu dieser. Der Begriff Plombenband ist dabei keinesfalls beschränkt ist auf eine bestimmte Querschnittsform. Diese kann selbstverständlich flach sein, wie bei einem Band überwiegend der Fall, jedoch auch rund, wie bei einem Seil oder bei einer Schnur oder einem Draht üblich. Aber auch eine andere, beispielsweise elliptische Querschnittsform, eine Hohlprofilform oder eine flache symmetrische oder asymmetrische Querschnittsform ist möglich, beispielsweise in Anlehnung an ein asymmetrisches oder symmetrisches aerodynamisches Profil, wie etwa ein Tragflächenprofil. Grundsätzlich ist jede Querschnittsform geeignet, die eine geringe Biegesteifigkeit entlang der Längserstreckung des Plombenbands oder gar ein biegeschlaffes Plombenband oder alternativ oder zusätzlich ein biegeweiches Plombenband zu verwirklichen erwarten lässt.

Die Plombe 01 kann alternativ oder zusätzlich einzelne oder eine Kombination mehrerer einleitend in Verbindung mit dem Stand der Technik und/oder in einem oder mehreren der zum Stand der Technik erwähnten Dokumente und/oder in der voranstehenden Beschreibung zu den in den Zeichnungen dargestellten Ausführungsbeispielen beschriebene Merkmale aufweisen.

Die Plombe 01 kann etwa zur Versiegelung von Behältnissen oder Geräten, beispielsweise an deren Gehäuse, beispielsweise im internationalen Waren- und Güterverkehr als Zollsiegel allgemein bekannte Verwendung finden.

Beispielsweise kann durch das als Verplomben bezeichnete Anbringen der Plombe 01 am Verschluss eines Behälters oder Geräts festgestellt werden, ob ein Behälter oder ein Gerät nach dem Verplomben beispielsweise unbefugt geöffnet wurde. Ebenso verhält es sich bei andersartigen Verwendungen der Plombe 01, beispielsweise als Nachweis, dass eine vorgenommene Einstellung an einem Gerät nicht verändert wurde, als Eintrittskartenersatz, zur Unbrauchbarmachung technischer Anschlüsse frei von deren Deaktivierung, sowie bei militärischen Einrichtungen.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Ansprüchen beinhaltet, auch wenn dieses Merkmal oder diese Kombination selbst nicht explizit in den Ansprüchen oder Ausführungsbeispielen angegeben ist.

Die Erfindung ist insbesondere im Bereich der Herstellung von Zollsiegeln und dergleichen gewerblich anwendbar.

Die Erfindung ist darüber hinaus im Bereich der Herstellung und dem Betrieb von Anlagen und Vorrichtungen gewerblich anwendbar, bei denen eine unbefugt vorgenommene Änderung einer Einstellung oder ein unbefugter Zugang anhand des Bruchs eines Siegels nachträglich feststellbar sein muss.

Die Erfindung wurde unter Bezugnahme auf bevorzugte Ausführungsformen beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 01: Plombe
- 02: Plombenkörper
- 03: Plombenband
- 04: Sollbruchstelle
- 05: Plombenkern
- 06: Plombenmantel
- 07: Sicherungslasche / Sicherungsetikett
- 08: Laschenschutz / Etikettenschutz

- 21: Partie
- 22: Partie
- 23: Klebeschicht

- 41: Perforationslinie
- 42: Perforationslinie
- 43: Halbschnitt

- 50: Sicherungselement
- 51: Knicklinie
- 52: Basispartie
- 53: Ankerpartie
- 54: Kerbe
- 55: verbleibende Plombenkernpartie
- 56: Trennlinie
- 57: Rille

- 60: Verbindungslasche (der Plombenmantelhälften)
- 61: Hälfte (des Plombenmantels)
- 62: Hälfte (des Plombenmantels)

- 70: Indikator

## Patentansprüche

1. Plombe (01) mit einem Plombenkörper (02) und einem Plombenband (03), wobei:
- der Plombenkörper (02) einen Plombenmantel (06) mit zwei in einem Ausgangszustand entlang einer Verbindungslasche (60) beweglich miteinander verbunden Plombenmantelhälften (61, 62) und einen Plombenkern (05) umfasst,
- die Plombenmantelhälften (61, 62) zur Überführung in einen Betriebszustand zumindest miteinander unlösbar versiegelbar verbindbar sind,
- zumindest eine der Plombenmantelhälften (61, 62) mit einer zur Herstellung der Versiegelung vorgesehenen Klebeschicht versehen ist,
- in dem Ausgangszustand eine Plombenmantelhälfte (61, 62) des Plombenkörpers (02) mit einem Plombenkern (05) versehen ist, der in dem Betriebszustand zwischen den unlösbar versiegelt verbundenen Plombenmantelhälften (61, 62) des Plombenkörpers (02) beherbergt ist,
- in dem Ausgangszustand ein erster Abschnitt des Plombenbands (03) zumindest zum Teil zwischen dem Plombenkern (05) und der mit diesem versehenen Plombenmantelhälfte (61, 62) des Plombenkörpers (02) festgelegt ist,
- der Plombenkern (05) ein Sicherungselement (50) für wenigstens einen zweiten Abschnitt des Plombenbands (03) aufweist, und
- das Sicherungselement (50) des Plombenkerns (05) eine mit einer Basispartie (52) im Ausgangszustand entlang einer Knicklinie (51) schwenkbar verbundene Ankerpartie (53) aufweist,
**dadurch gekennzeichnet, dass** die Ankerpartie (53) des Sicherungselements (50) mehrseitig von einer verbleibenden Plombenkernpartie (55) des Plombenkerns (05) umgeben ist, von welcher verbleibenden Plombenkernpartie (55) jedoch nur ein Teil via der Knicklinie (51) mit der Ankerpartie (53) verbunden ist.

2. Plombe nach Anspruch 1, wobei der erste Abschnitt des Plombenbands (03) durch eine im Plombenkern (05) ausgebildete Rille (57) geführt zwischen dem Plombenkern (05) und der mit diesem versehenen Plombenmantelhälfte (61, 62) festgelegt ist.

3. Plombe nach Anspruch 1 oder 2, wobei ein verbleibender Teil des Plombenkerns (05, 52, 55) eine Ebene aufspannt, innerhalb der die Ankerpartie (53) vom verbleibenden Teil des Plombenkerns (05, 52, 55) ganz oder teilweise umgeben ist.

4. Plombe nach Anspruch 1, 2 oder 3, wobei in dem Ausgangszustand zumindest die verbleibende Plombenkernpartie (55) und/oder die Basispartie (52) mit einer Plombenmantelhälfte (61, 62) verbunden, insbesondere verklebt ist.

5. Plombe nach einem der Ansprüche 1 bis 4, wobei die Knicklinie (51) durch einen Halbschnitt (43) verwirklicht ist.

6. Plombe nach einem der voranstehenden Ansprüche, wobei die Ankerpartie (53) einseitig an die Knickline (51) angrenzt.

7. Plombe nach Anspruch 6, wobei die Ankerpartie (53) an ihren übrigen Seiten durch eine Trennungslinie (56) von der verbleibenden Plombenkernpartie (55) getrennt ist.

8. Plombe nach Anspruch 7, wobei die Trennungslinie (56) zur Knicklinie (51) hin V-förmig konvergierend verläuft.

9. Plombe nach einem der voranstehenden Ansprüche, wobei angrenzend an die Ankerpartie (53) eine Kerbe (54) vorgesehen ist.

10. Plombe nach einem der voranstehenden Ansprüche, wobei die verbleibende Plombenkernpartie (55) zumindest im Ausgangszustand an einer mit dem Plombenkern versehenen Plombenmantelhälfte (61, 62) festgelegt ist, wohingegen die Ankerpartie (53) im Ausgangszustand um die Knicklinie (51) aus der von der verbleibende Plombenkernpartie (55) aufgespannten Fläche herausschwenkbar verbleibt.

11. Plombe nach einem der voranstehenden Ansprüche, wobei der Plombenkörper (02) mit Sollbruchstellen (04) versehen ist, die durch Einreißen einen Versuch eines Lösens des Plombenbands (03) vom Plombenkörper (02) anzeigen.

12. Plombe nach Anspruch 11, wobei die Sollbruchstellen 04 eine oder mehrere Perforationslinien (41, 42) im Plombenmantel (06) umfassen.

13. Plombe nach Anspruch 12, wobei sich zumindest eine Perforationslinie (41, 42) entlang einer Verlängerung des Verlaufs des zur Herstellung des Betriebszustands um die Ankerpartie (53) geschlungenen Abschnitts des Plombenbands (03) innerhalb des Plombenmantels (06) erstreckt.

14. Plombe nach Anspruch 12 oder 13, wobei die Perforationslinien (41, 42) spiegelsymmetrisch zur Verbindungslasche (60) auf den beiden Plombenmantelhälften (61, 62) angeordnet sind.

15. Plombe nach Anspruch 15, wobei die Knicklinie (51) im Betriebszustand ebenfalls deckungsgleich mit den Performationslinien (41, 42) angeordnet ist.

## Claims

1. Seal (01) with a seal body (02) and a seal band (03), wherein:
• the seal body (02) comprises a seal shell (06) with two seal shell halves (61, 62) movably connected to each other along a connecting tab (60) in an initial state and a seal core (05),
• the seal shell halves (61, 62) are permanently sealably connectable to each other for transfer to an operating state,
• at least one of the seal shell halves (61, 62) is provided with an adhesive layer intended for producing the seal,
• in the initial state, one seal shell half (61, 62) of the seal body (02) is provided with a seal core (05) which is housed between the permanently sealed connected seal shell halves (61, 62) of the seal body (02) in the operating state,
• in the initial state, a first section of the seal band (03) is fixed at least partially between the seal core (05) and the seal shell half (61, 62) of the seal body (02) provided with it,
• the seal core (05) has a securing element (50) for at least a second section of the seal band (03), and
• the securing element (50) of the seal core (05) has an anchor portion (53) pivotably connected to a base portion (52) in the initial state along a fold line (51),
**characterized in that** the anchor portion (53) of the securing element (50) is surrounded on multiple sides by a remaining seal core portion (55) of the seal core (05), of which remaining seal core portion (55) however only a part is connected to the anchor portion (53) via the fold line (51).

2. Seal according to claim 1, wherein the first section of the seal band (03) is fixed between the seal core (05) and the seal shell half (61, 62) provided with it, guided through a groove (57) formed in the seal core (05).

3. Seal according to claim 1 or 2, wherein a remaining part of the seal core (05, 52, 55) spans a plane within which the anchor portion (53) is completely or partially surrounded by the remaining part of the seal core (05, 52, 55).

4. Seal according to claim 1, 2 or 3, wherein in the initial state at least the remaining seal core portion (55) and/or the base portion (52) is connected, in particular glued, to a seal shell half (61, 62).

5. Seal according to one of claims 1 to 4, wherein the fold line (51) is realized by a half cut (43).

6. Seal according to one of the preceding claims, wherein the anchor portion (53) adjoins the fold line (51) on one side.

7. Seal according to claim 6, wherein the anchor portion (53) is separated from the remaining seal core portion (55) on its remaining sides by a separation line (56).

8. Seal according to claim 7, wherein the separation line (56) runs convergently in a V-shape toward the fold line (51).

9. Seal according to one of the preceding claims, wherein a notch (54) is provided adjacent to the anchor portion (53).

10. Seal according to one of the preceding claims, wherein the remaining seal core portion (55) is fixed to a seal shell half (61, 62) provided with the seal core at least in the initial state, whereas the anchor portion (53) remains pivotable in the initial state around the fold line (51) out of the surface spanned by the remaining seal core portion (55).

11. Seal according to one of the preceding claims, wherein the seal body (02) is provided with predetermined breaking points (04) which indicate by tearing an attempt to release the seal band (03) from the seal body (02).

12. Seal according to claim 11, wherein the predetermined breaking points 04 comprise one or more perforation lines (41, 42) in the seal shell (06).

13. Seal according to claim 12, wherein at least one perforation line (41, 42) extends along an extension of the course of the section of the seal band (03) wrapped around the anchor portion (53) for producing the operating state within the seal shell (06).

14. Seal according to claim 12 or 13, wherein the perforation lines (41, 42) are arranged mirror-symmetrically to the connecting tab (60) on the two seal shell halves (61, 62).

15. Seal according to claim 15, wherein the fold line (51) is also arranged congruently with the perforation lines (41, 42) in the operating state.

## Revendications

1. Joint (01) comprenant un corps de joint (02) et une bande de joint (03), dans lequel :
▪le corps de joint (02) comprend une coque de joint (06) avec deux moitiés de coque de joint (61, 62) reliées de manière mobile l'une à l'autre le long d'une languette de liaison (60) dans un état initial et un noyau de joint (05),
les moitiés de coque de scellage (61, 62) peuvent être reliées entre elles de manière étanche et permanente pour passer à un état de fonctionnement,
▪au moins l'une des moitiés de coque de scellage (61, 62) est pourvue d'une couche adhésive destinée à produire le scellage,
▪dans l'état initial, une moitié de coque de scellage (61, 62) du corps de scellage (02) est pourvue d'un noyau de scellage (05) qui est logé entre les moitiés de coque de scellage (61, 62) du corps de scellage (02) reliées de manière étanche de façon permanente dans l'état de fonctionnement,
▪dans l'état initial, une première section de la bande de scellement (03) est fixée au moins partiellement entre le noyau de scellement (05) et la moitié de coque de scellement (61, 62) du corps de scellement (02) qui en est pourvue, le noyau de scellement (05) comporte un élément de fixation (50) pour au moins une deuxième section de la bande de scellement (03), et
▪l'élément de fixation (50) du noyau du joint (05) comporte une partie d'ancrage (53) reliée de manière pivotante à une partie de base (52) à l'état initial le long d'une ligne de pliage (51),
**caractérisé en ce que** la partie d'ancrage (53) de l'élément de fixation (50) est entourée sur plusieurs côtés par une partie restante (55) du corps de scellage (05), dont seule une partie est reliée à la partie d'ancrage (53) via la ligne de pliage (51).

2. Joint selon la revendication 1, dans lequel la première section de la bande d'-étanchéité (03) est fixée entre le noyau d'étanchéité (05) et la demi-coque d'-étanchéité (61, 62) qui lui est associée, guidée à travers une rainure (57) formée dans le noyau d'étanchéité (05).

3. Joint selon la revendication 1 ou 2, dans lequel une partie restante du noyau du joint (05, 52, 55) s'étend sur un plan dans lequel la partie d'ancrage (53) est complètement ou partiellement entourée par la partie restante du noyau du joint (05, 52, 55).

4. Joint selon la revendication 1, 2 ou 3, dans lequel, dans l'état initial, au moins la partie restante du noyau du joint (55) et/ou la partie de base (52) est reliée, en particulier collée, à une moitié de coque de joint (61, 62).

5. Joint selon l'une des revendications 1 à 4, dans lequel la ligne de pliage (51) est réalisée par une demi-coupe (43).

6. Joint selon l'une des revendications précédentes, dans lequel la partie d'ancrage (53) est adjacente à la ligne de pliage (51) sur un côté.

7. Joint selon la revendication 6, dans lequel la partie d'ancrage (53) est séparée de la partie centrale restante (55) du joint sur ses côtés restants par une ligne de séparation (56).

8. Joint selon la revendication 7, dans lequel la ligne de séparation (56) converge en forme de V vers la ligne de pliage (51).

9. Joint selon l'une des revendications précédentes, dans lequel une encoche (54) est prévue à proximité de la partie d'ancrage (53).

10. Scellé selon l'une des revendications précédentes, dans lequel la partie centrale restante (55) du scellé est fixée à une demi-coque (61, 62) du scellé pourvue du noyau du scellé au moins dans l'état initial, tandis que la partie d'ancrage (53) reste pivotable dans l'état initial autour de la ligne de pliage (51) hors de la surface couverte par la partie centrale restante (55) du scellé.

11. Scellé selon l'une des revendications précédentes, dans lequel le corps de scellé (02) est muni de points de rupture prédéterminés (04) qui indiquent par déchirure une tentative de libération de la bande de scellé (03) du corps de scellé (02).

12. Scellé selon la revendication 11, dans lequel les points de rupture prédéterminés 04 comprennent une ou plusieurs lignes de perforation (41, 42) dans la coque de scellé (06).

13. Scellé selon la revendication 12, dans lequel au moins une ligne de perforation (41, 42) s'étend le long d'un prolongement du tracé de la section de la bande de scellage (03) enroulée autour de la partie d'ancrage (53) pour produire l'état de fonctionnement à l'intérieur de la coque de scellage (06).

14. Joint selon la revendication 12 ou 13, dans lequel les lignes de perforation (41, 42) sont disposées de manière symétrique par rapport à la languette de connexion (60) sur les deux moitiés de coque de joint (61, 62).

15. Joint selon la revendication 15, dans lequel la ligne de pliage (51) est également disposée de manière congruente avec les lignes de perforation (41, 42) dans l'état de fonctionnement.
